# EUROPÄISCHE PATENTSCHRIFT

(11) **EP 3 230 579 B1**
(45) Veröffentlichungstag und Bekanntmachung des Hinweises auf die Patenterteilung: **21.04.2021**
(21) Anmeldenummer: 15775232.0
(22) Anmeldetag: 08.10.2015
(51) Int. Cl.: F02M 59/44, F16J 15/3236, F16J 15/3244

(54) **KRAFTSTOFF-HOCHDRUCKPUMPE MIT EINEM KOLBEN**
HIGH-PRESSURE FUEL PUMP COMPRISING A PISTON
POMPE À CARBURANT HAUTE PRESSION MUNIE D'UN PISTON

(30) Priorität: 09.12.2014 DE 102014225319
(43) Veröffentlichungstag der Anmeldung: 18.10.2017
(73) Patentinhaber: Robert Bosch GmbH, 70442 Stuttgart (DE)
(72) Erfinder: KRUMBHOLZ, Thomas, 70469 Stuttgart (DE); STRITZEL, Soeren, 71032 Boeblingen (DE); JAHN, Heiko, 71732 Tamm (DE)
(86) Internationale Anmeldenummer: PCT/EP2015/073221
(87) Internationale Veröffentlichungsnummer: WO 2016/091419

(56) Entgegenhaltungen:
- EP-A1- 1 739 305
- EP-A1- 2 559 922
- EP-A1- 2 754 929
- EP-A2- 0 980 998
- WO-A1-2008/061581
- WO-A1-2016/083587
- JP-A- 2000 161 497
- JP-A- 2009 216 168

## Beschreibung

### Stand der Technik

Die Erfindung betrifft eine Kraftstoff-Hochdruckpumpe nach dem Oberbegriff des Anspruchs 1, sowie zwei Verfahren nach den nebengeordneten Patentansprüchen.

Vom Markt her bekannt sind Kraftstoffpumpen für Kraftstoffsysteme für Brennkraftmaschinen, bei welchen ein Kolben mittels eines durch eine Nocke oder eine Exzenterscheibe gebildeten Antriebs axial bewegt werden kann. Eine erforderliche Rückstellkraft des Kolbens wird dabei mittels einer Druckfeder erzeugt. Beispielsweise ist ein von einer Druckfeder beaufschlagter Federteller auf einen Endabschnitt des Kolbens aufgepresst. Dabei kann eine radial außen an dem Kolben angeordnete Kolbendichtung einen ersten "kraftstoffseitigen" Abschnitt des Kolbens von einem zweiten "ölseitigen" Abschnitt des Kolbens trennen, wodurch eine Vermischung von Kraftstoff und Öl zumindest gering gehalten wird.

Kraftstoff Hochdruckpumpen sind ferner bekannt aus der JP 2009 216 168 A, der EP2754929 A1, der JP 2000 161 497 A sowie der nachveröffentlichten WO 2016/083587 A1.

### Offenbarung der Erfindung

Das der Erfindung zugrunde liegende Problem wird durch eine Kraftstoff-Hochdruckpumpe nach Anspruch 1, sowie durch zwei Verfahren nach den nebengeordneten Ansprüchen gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung betrifft eine Kraftstoff-Hochdruckpumpe mit einem Kolben, an dessen einem Antrieb zugewandten Endabschnitt eine den Kolben radial umschließende Dichteinrichtung angeordnet ist, wobei der Kolben entlang einer Längsachse relativ zu der Dichteinrichtung verschiebbar ist. Erfindungsgemäß weist die Dichteinrichtung einen ersten und einen zweiten radial innen umlaufenden Dichtabschnitt auf, wobei der erste und der zweite Dichtabschnitt jeweils an voneinander entfernt angeordneten axialen Endbereichen der Dichteinrichtung angeordnet sind, und wobei die Dichteinrichtung ein spanend nachbearbeitetes Spritzgussteil umfasst, an dem die Dichtabschnitte vorhanden sind. Die erfindungsgemäße Dichteinrichtung dichtet die Kraftstoff-Hochdruckpumpe an einer radial äußeren Mantelfläche des Kolbens gegen ein flüssiges Medium ab. Insbesondere kann die Dichteinrichtung an einem "inneren" Bereich der Kraftstoff-Hochdruckpumpe gegen den Kraftstoff und an einem "äußeren" Bereich gegen Öl abdichten. Vorzugsweise ist das spanend nachbearbeitete Spritzgussteil aus einem elastischen Material hergestellt.

Die Erfindung weist den Vorteil auf, dass - dank des spanend nachbearbeiteten Spritzgussteils - die Dichteinrichtung nur in einem vergleichsweise geringen Maß spanend bearbeitet ist, wodurch Kosten gespart werden können. Durch die insgesamt nur zwei Dichtabschnitte ist eine Anzahl von erforderlichen Hinterschnitten besonders klein, wodurch also die Zerspanbarkeit verbessert wird. Außerdem kann eine Geometrie der beiden Dichtabschnitte optimiert und somit ein Verschleiß der Dichteinrichtung vermindert werden. Entsprechend kann auch eine Leckage an dem Kolben reduziert werden. Außerdem kann ein für die Dichteinrichtung erforderlicher Bauraum klein gehalten werden. Mittels des erfindungsgemäß spanend nachbearbeiteten einteiligen Spritzgussteils können Herstellkosten vergleichsweise klein gehalten werden, insbesondere gegenüber einer zweiteiligen Dichteinrichtung, die "frei fallend" (also ohne Hinterschnitte) spritzgegossen ist.

Weiterhin kann vorgesehen sein, dass ein axialer Abstand zwischen dem ersten und dem zweiten Dichtabschnitt mindestens einem Hub des Kolbens entspricht.

Dadurch wird eine besonders gute Dichtwirkung an dem Kolben erreicht und der Betrieb der Kraftstoff-Hochdruckpumpe somit verbessert.

In einer Ausgestaltung der Kraftstoff-Hochdruckpumpe ist das spanend nachbearbeitete Spritzgussteil axial spiegelsymmetrisch ausgeführt. Dadurch kann eine Montage der Dichteinrichtung besonders einfach erfolgen.

In einer weiteren Ausgestaltung der Kraftstoff-Hochdruckpumpe ist mindestens ein axialer Abschnitt des spanend nachbearbeiteten Spritzgussteils derart ausgeführt, dass sich ein Kontaktdruck zwischen einer Kontaktfläche des Dichtabschnitts und einer Mantelfläche des Kolbens entlang der Längsachse verändert. Dabei ist der mindestens eine axiale Abschnitt vorzugsweise derart ausgeführt, dass eine - durch die Relativbewegung zwischen dem Kolben und der Dichteinrichtung bedingte - "Förderung" von Fluid entlang der Mantelfläche des Kolbens axial weg von der Dichteinrichtung stärker ist als axial hin zu der Dichteinrichtung. Dadurch können die Dichtwirkung verbessert und zugleich ein Verschleiß klein gehalten werden.

Vorzugsweise ist, ausgehend von einer axialen Stelle, an welcher der Kontaktdruck maximal ist, ein Betrag eines Gradienten des Kontaktdrucks in einer axial von der Stelle zum nächstgelegenen Rand des spanend nachbearbeiteten Spritzgussteils weisenden Richtung größer als ein Betrag eines Gradienten des Kontaktdrucks in einer axial von der Stelle zum ferngelegenen Rand des spanend nachbearbeiteten Spritzgussteils weisenden Richtung. Dadurch kann die Dichtwirkung der Dichteinrichtung weiter verbessert und Leckagen somit minimiert werden.

Ergänzend kann vorgesehen sein, dass vor einem Einbau der Dichteinrichtung in die Kraftstoff-Hochdruckpumpe ein radial innerer konusförmiger erster Wandabschnitt an einem axial äußeren ersten axialen Abschnitt des spanend nachbearbeiteten Spritzgussteils in Bezug auf eine zu der Längsachse rechtwinkligen Ebene einen Winkel α von in etwa 30 Grad bis in etwa 60 Grad aufweist, und ein radial innerer konusförmiger zweiter Wandabschnitt an einem axial zu dem ersten axialen Abschnitt benachbarten zweiten axialen Abschnitt in Bezug auf die Längsachse einen Winkel β aufweist, welcher in etwa halb so groß ist wie der Winkel a. Damit können die oben beschriebenen Gradienten des Kontaktdrucks besonders gut erzeugt und somit eine Dichtheit der Kraftstoff-Hochdruckpumpe verbessert werden.

In einer weiteren Ausgestaltung der Kraftstoff-Hochdruckpumpe ist an voneinander entfernt angeordneten axialen Endbereichen des spanend nachbearbeiteten Spritzgussteils radial außen jeweils eine Dichtwulst angeordnet. Durch die insgesamt zwei Dichtwülste kann ein radial äußerer Abschnitt der Dichteinrichtung besonders gut gegen einen radial inneren Abschnitt eines die Dichteinrichtung aufnehmenden Dichtungsträgers abgedichtet werden. Durch die erfindungsgemäßen zwei Dichtwülste kann auch ein axiales "Verkippen" der Dichteinrichtung wirksam verhindert werden, wodurch der Betrieb verbessert und die Dauerfestigkeit erhöht werden kann. Ebenso kann eine Montage der Dichteinrichtung verbessert werden.

Außerdem kann vorgesehen sein, dass das spanend nachbearbeitete Spritzgussteil ein Perfluoralkoxy-Material, PFA, umfasst. Das Perfluoralkoxy-Material eignet sich besonders gut für die vergleichsweise hohen Anforderungen einer Kraftstoff-Hochdruckpumpe. Durch das Spritzverfahren können Herstellkosten vermindert werden. Ergänzend kann vorgesehen sein, dass in dem Perfluoralkoxy-Material Füllstoffe integriert vorhanden sind, wodurch Kosten gesenkt bzw. die Eigenschaften der Dichteinrichtung weiter verbessert werden können.

Weiterhin betrifft die Erfindung ein erstes Verfahren zum Herstellen der Kraftstoff-Hochdruckpumpe gemäß Anspruch 1. Erfindungsgemäß wird die Dichteinrichtung gemäß den folgenden Schritten hergestellt:
(a) Spritzgießen eines Spritzgussteils der Dichteinrichtung zu einer Ausgangsform, wobei die Ausgangsform eine axiale zentrische Bohrung umfasst;
(b) Spanendes Nachbearbeiten einer radial inneren Kontur der Ausgangsform, wodurch ein spanend nachbearbeitetes Spritzgussteil mit einem ersten und einem zweiten radial innen umlaufenden Dichtabschnitt hergestellt wird, wobei der erste und der zweite Dichtabschnitt jeweils an voneinander entfernt angeordneten axialen Endbereichen des spanend nachbearbeiteten Spritzgussteils angeordnet sind.

Weiterhin betrifft die Erfindung ein zweites Verfahren zum Herstellen einer Kraftstoff-Hochdruckpumpe gemäß Anspruch 1. Erfindungsgemäß wird die Dichteinrichtung gemäß den folgenden Schritten hergestellt:
(a1) Spritzgießen eines Spritzgussteils der Dichteinrichtung zu einer Ausgangsform;
(a2) Bohren einer axialen zentrischen Bohrung in der Ausgangsform;
(b) Spanendes Nachbearbeiten einer radial inneren Kontur der Ausgangsform, wodurch ein spanend nachbearbeitetes Spritzgussteil mit einem ersten und einem zweiten radial innen umlaufenden Dichtabschnitt hergestellt wird, wobei der erste und der zweite Dichtabschnitt jeweils an voneinander entfernt angeordneten axialen Endbereichen des spanend nachbearbeiteten Spritzgussteils angeordnet sind.

Das erste Verfahren ist also dadurch charakterisiert, dass die axiale zentrische Bohrung bereits durch das Spritzgießen mit erzeugt wird, wodurch ein Materialverbrauch gesenkt und ein separater Bohrvorgang gespart wird. Das zweite Verfahren ist dadurch charakterisiert, dass die axiale zentrische Bohrung nach dem Spritzgießen spanend erzeugt wird. Der anschließende Verfahrensschritt (b) ist für beide Verfahren gleich. Die erfindungsgemäße Dichteinrichtung kann alternativ mittels des ersten oder des zweiten Verfahrens hergestellt werden. Dabei ergeben sich für die fertige Dichteinrichtung die gleichen Vorteile wie bereits oben beschrieben.

Nachfolgend werden beispielhafte Ausführungsformen der Erfindung unter Bezugnahme auf die Zeichnung erläutert. In der Zeichnung zeigen:
- Figur 1: eine vereinfachte schematische Darstellung eines Kraftstoffsystems für eine Brennkraftmaschine;
- Figur 2: einen Längsschnitt durch eine Kraftstoff-Hochdruckpumpe des Kraftstoffsystems von Figur 1;
- Figur 3: einen Ausschnitt von Figur 2 in einer vergrößerten Darstellung;
- Figur 4: eine axiale Schnittansicht einer Dichteinrichtung für einen Kolben der Kraftstoff-Hochdruckpumpe;
- Figur 5: eine Darstellung eines Kontaktdrucks an der Dichteinrichtung in Abhängigkeit von einer Längskoordinate zusammen mit einer Schnittansicht eines Dichtabschnitts der Dichteinrichtung; und
- Figur 6: ein Flussdiagramm für ein Verfahren zum Herstellen der Dichteinrichtung.

Es werden für funktionsäquivalente Elemente und Größen in allen Figuren auch bei unterschiedlichen Ausführungsformen die gleichen Bezugszeichen verwendet.

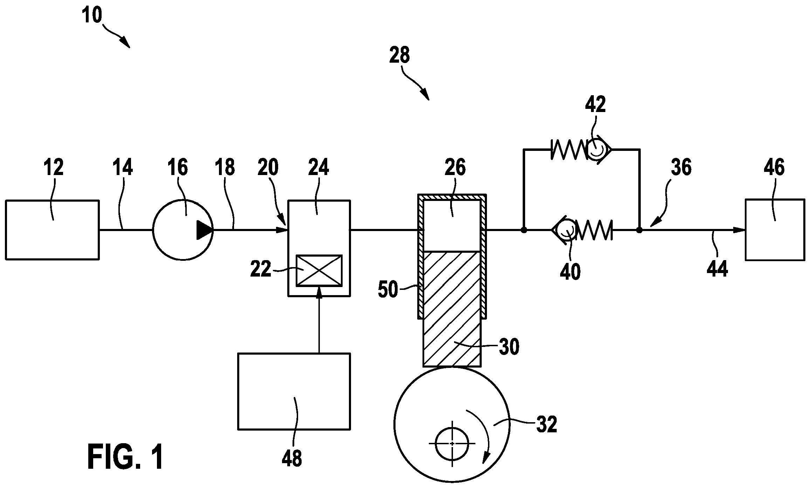

Figur 1 zeigt ein Kraftstoffsystem 10 für eine weiter nicht dargestellte Brennkraftmaschine in einer vereinfachten schematischen Darstellung. Aus einem Kraftstofftank 12 wird Kraftstoff über eine Saugleitung 14, mittels einer Vorförderpumpe 16, über eine Niederdruckleitung 18, über einen Einlass 20 eines von einer elektromagnetischen Betätigungseinrichtung 22 betätigbaren Mengensteuerventils 24 einem Förderraum 26 einer Kraftstoff-Hochdruckpumpe 28 zugeführt. Beispielsweise kann das Mengensteuerventil 24 ein zwangsweise öffenbares Einlassventil der Kraftstoff-Hochdruckpumpe 28 sein.

Vorliegend ist die Kraftstoff-Hochdruckpumpe 28 als Kolbenpumpe ausgeführt, wobei ein Kolben 30 mittels einer Nockenscheibe 32 ("Antrieb") in der Zeichnung vertikal bewegt werden kann. Hydraulisch zwischen dem Förderraum 26 und einem Auslass 36 der Kraftstoff-Hochdruckpumpe 28 ist ein in der Figur 1 als federbelastetes Rückschlagventil gezeichnetes Auslassventil 40 angeordnet, welches zu dem Auslass 36 hin öffnen kann. Der Auslass 36 ist an eine Hochdruckleitung 44 und über diese an einen Hochdruckspeicher 46 ("Common Rail") angeschlossen. Weiterhin ist hydraulisch zwischen dem Auslass 36 und dem Förderraum 26 ein ebenfalls als federbelastetes Rückschlagventil gezeichnetes Druckbegrenzungsventil 42 angeordnet, welches zum Förderraum 26 hin öffnen kann.

Im Betrieb des Kraftstoffsystems 10 fördert die Vorförderpumpe 16 Kraftstoff vom Kraftstofftank 12 in die Niederdruckleitung 18. Das Mengensteuerventil 24 kann in Abhängigkeit von einem jeweiligen Bedarf an Kraftstoff geschlossen und geöffnet werden. Hierdurch wird die zu dem Hochdruckspeicher 46 geförderte Kraftstoffmenge beeinflusst. Die elektromagnetische Betätigungseinrichtung 22 wird durch eine Steuer- und/oder Regeleinrichtung 48 angesteuert.

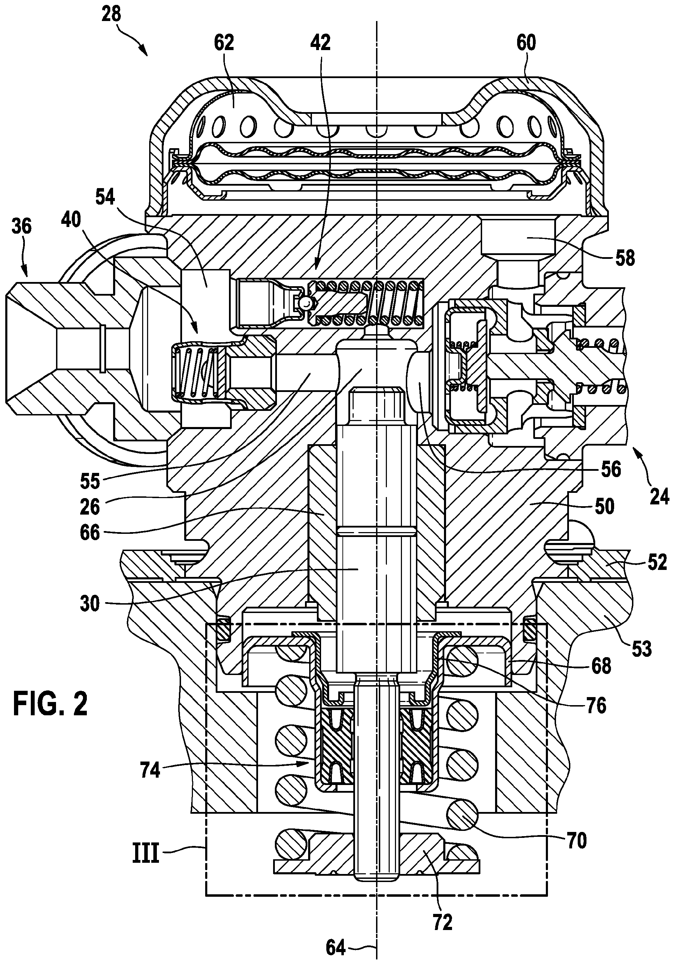

Figur 2 zeigt die Kraftstoff-Hochdruckpumpe 28 von Figur 1 in einer axialen Schnittdarstellung. Die Kraftstoff-Hochdruckpumpe 28 umfasst ein Gehäuse 50, welches mittels eines Flansches 52 an einem Motorblock 53 der Brennkraftmaschine anschraubbar ist. Das Gehäuse 50 weist außerdem mehrere hydraulische Kanäle 54, 55, 56 und 58 auf. Im in der Figur 2 oberen Bereich umfasst die Kraftstoff-Hochdruckpumpe 28 einen Deckel 60 und einen Druckdämpfer 62. Die Kraftstoff-Hochdruckpumpe 28 ist zumindest teilweise rotationssymmetrisch zu einer Längsachse 64 ausgeführt.

In einem in der Zeichnung linken Bereich weist die Kraftstoff-Hochdruckpumpe 28 den Auslass 36 zum Anschluss an die Hochdruckleitung 44 auf. Hydraulisch mit dem Auslass 36 verbunden sind das Auslassventil 40 (in einem in der Zeichnung linken Abschnitt) und das Druckbegrenzungsventil 42 (in einem mittleren Abschnitt) in dem Gehäuse 50 angeordnet. In einem in der Zeichnung mittleren rechten Abschnitt des Gehäuses 50 ist das Mengensteuerventil 24 angeordnet.

Erfindungsgemäß umfasst die Kraftstoff-Hochdruckpumpe 28: Den Förderraum 26, den Kolben 30 und eine Laufbuchse 66. Der entlang der Längsachse 64 verschiebbare Kolben 30 ist erfindungsgemäß als so genannter "Stufenkolben" ausgeführt und weist im Wesentlichen zwei Abschnitte auf. Einen ersten Abschnitt (in der Zeichnung oben) mit einem vergleichsweise großen Durchmesser, mittels welchem er in der Laufbuchse 66 geführt ist, und einen zweiten Abschnitt (in der Zeichnung unten) mit einem vergleichsweise kleinen Durchmesser.

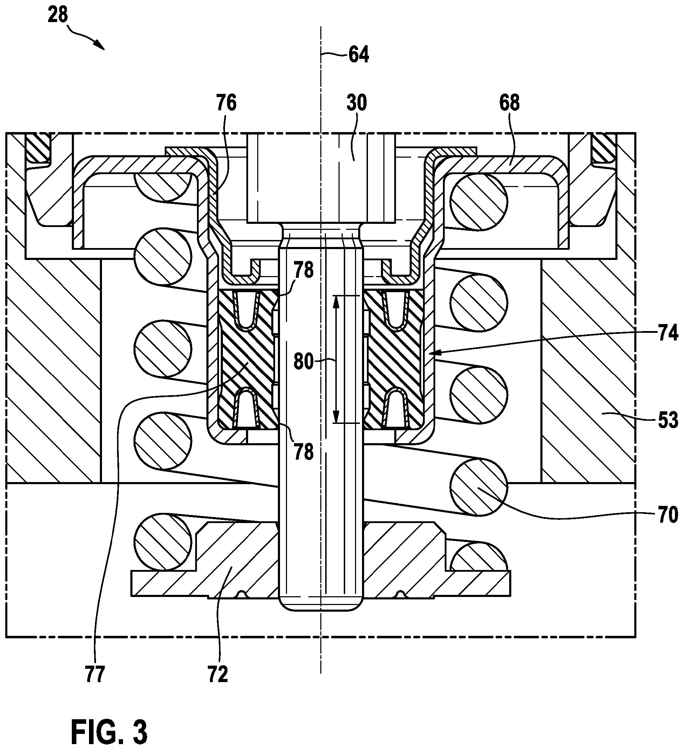

Ein unterer Bereich von Figur 2 ist durch einen Rahmen III gekennzeichnet und in der Figur 3 vergrößert dargestellt. Insbesondere zeigt die Figur 3 einen in etwa topfförmig ausgebildeten Dichtungsträger 68, sowie eine radial außen um einen Abschnitt des Dichtungsträgers 68 angeordnete und als Schraubenfeder ausgeführte Kolbenfeder 70, die sich mit einem Endabschnitt an dem Dichtungsträger 68 abstützt, weswegen dieser auch als "Federaufnahme" bezeichnet wird. An einem in der Zeichnung unteren und dem Antrieb zugewandten Endabschnitt des Kolbens 30 ist ein Federteller 72 aufgepresst, an welchem ein Endabschnitt der Kolbenfeder 70 aufgenommen ist.

Radial innerhalb des Dichtungsträgers 68 ist eine als Dichteinrichtung 74 bezeichnete Kolbendichtung (auch als "Niederdruckdichtung" bezeichnet) angeordnet, welche den unteren zweiten Abschnitt (welcher dem Antrieb zugewandt ist) des Kolbens 30 radial umschließt und einen zwischen dem Gehäuse 50 und dem Dichtungsträger 68 vorhandenen Fluidraum ("Stufenraum") nach außen zum Motorblock 53 hin abdichtet. Der Kolben 30 ist entlang der Längsachse 64 relativ zu der Dichteinrichtung 74 verschiebbar. In grober Näherung weist die Dichteinrichtung 74 eine insgesamt ringförmige Struktur auf.

Vorliegend ist die Dichteinrichtung 74 in der Figur 2 nach oben durch einen innerhalb des Dichtungsträgers 68 angeordneten und ebenfalls in etwa hutförmig ausgebildeten Halteabschnitt 76 axial abgestützt. In der Zeichnung charakterisieren ein Raumbereich oberhalb der Dichteinrichtung 74 eine "Kraftstoffseite" und ein Raumbereich unterhalb der Dichteinrichtung 74 eine "Ölseite".

Weiterhin ist die Dichteinrichtung 74 in der Figur 2 nach unten durch einen nach radial innen gebogenen umlaufenden Randabschnitt des Dichtungsträgers 68 axial abgestützt. Es versteht sich, dass die Dichteinrichtung 74 innerhalb eines durch den Halteabschnitt 76 und den besagten Randabschnitt bestimmten Bereichs gegebenenfalls ein geringes axiales Spiel aufweisen kann.

Die Dichteinrichtung 74 ist entlang der Längsachse 64 radial außen an dem Kolben 30 angeordnet. Dabei ist die Dichteinrichtung 74 im Wesentlichen rotationssymmetrisch ausgeführt, wobei in der Zeichnung obere und untere Abschnitte der Dichteinrichtung 74 zueinander axial spiegelsymmetrisch ausgeführt sind. Erfindungsgemäß umfasst die Dichteinrichtung 74 ein spanend nachbearbeitetes Spritzgussteil 77. Dieses umfasst vorzugsweise ein elastisches Material, vorzugsweise ein Perfluoralkoxy-Material ("PFA"), bzw. ist aus diesem hergestellt, und ist mittels eines Spritzgießverfahrens hergestellt. Weiterhin ist zu erkennen, dass das spanend nachbearbeitete Spritzgussteil 77 der Dichteinrichtung 74 an voneinander entfernt angeordneten axialen Endbereichen radial innen jeweils nur einen umlaufenden Dichtabschnitt 78 aufweist. Mittels der Dichtabschnitte 78 erfolgt eine "dynamische" Abdichtung gegen den relativ zu der Dichteinrichtung 74 axial bewegbaren Kolben 30.

Vorzugsweise entspricht ein axialer Abstand 80 der Dichtabschnitte 78 mindestens einem Hub des Kolbens 30. Dadurch können die Dichtabschnitte 78 den Kraftstoff (in der Zeichnung oberhalb der Dichteinrichtung 74) bzw. das Öl (in der Zeichnung unterhalb der Dichteinrichtung 74) besonders gut "abstreifen" und somit eine Vermischung des Kraftstoffs mit dem Öl verhindern oder zumindest minimieren.

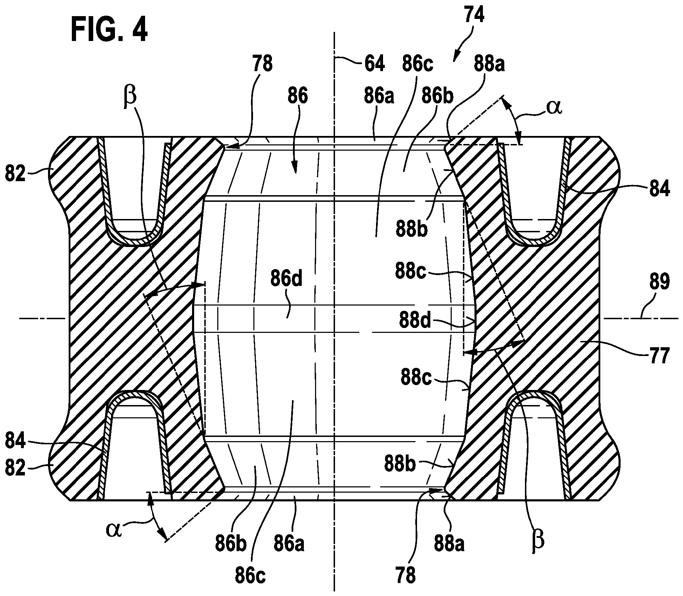

Figur 4 zeigt die Dichteinrichtung 74 in einer nochmals vergrößerten Schnittansicht. Dabei liegt die Dichteinrichtung 74 jedoch als nicht verbautes Einzelteil vor, das heißt, sie wird vorliegend nicht durch den Kolben 30 oder den Dichtungsträger 68 verformt. Die Dichteinrichtung 74 ist zumindest im Wesentlichen rotationssymmetrisch zu der Längsachse 64 ausgeführt. Weiterhin ist die Dichteinrichtung 74 spiegelsymmetrisch zu einer (in der Zeichnung horizontalen und zu der Längsachse 64 rechtwinkligen) Querebene 89 ausgeführt.

Weiterhin umfasst das spanend nachbearbeitete Spritzgussteil 77 der Dichteinrichtung 74 an voneinander entfernten axialen Endbereichen radial außen jeweils eine umlaufende Dichtwulst 82. Mittels der Dichtwülste 82 kann die Dichteinrichtung 74 gegen einen radial inneren Abschnitt des Dichtungsträgers 68 "statisch" dichten. Dazu ist die Dichteinrichtung 74 kraftschlüssig in dem Dichtungsträger 68 angeordnet. In einem radial mittleren Abschnitt des spanend nachbearbeiteten Spritzgussteils 77 der Dichteinrichtung 74 sind an zueinander entfernten axialen Endbereichen der Dichteinrichtung 74 radial umlaufende und insoweit ringförmige Federn 84 aufgenommen, welche jeweils aus einem Federblech hergestellt sind und in der Schnittebene der Figur 4 in etwa U-förmig ausgebildet sind. Die Federn 84 sind in der Figur 4 jeweils nach oben bzw. unten offen. Durch die Federn 84 werden einerseits die zwei Dichtabschnitte 78 gegen den Kolben 30 und andererseits die Dichtwülste 82 gegen den Dichtungsträger 68 beaufschlagt.

Radial innen um die Längsachse 64 weist die Dichteinrichtung 74 eine rotationssymmetrische zentrische Ausnehmung 86 in der Art eines Durchgangslochs auf. Die Ausnehmung 86 umfasst zwei (jeweils äußere) erste axiale Abschnitte 86a, daran anschließend zwei (jeweils "mittlere") zweite axiale Abschnitte 86b und daran anschließend zwei (jeweils innere) dritte axiale Abschnitte 86c. Axial mittig zwischen den dritten axialen Abschnitten 86c ist ein einzelner vierter axialer Abschnitt 86d angeordnet. Die ersten, zweiten und dritten axialen Abschnitte 86a, 86b und 86c, sowie der vierte axiale Abschnitt 86d weisen jeweils zugehörige radial innere erste, zweite, dritte und vierte Wandabschnitte 88a, 88b, 88c und 88d auf.

Eine durch die ersten, zweiten und dritten Wandabschnitte 88a, 88b und 88c gebildete radial innere Kontur der Ausnehmung 86 ist jeweils konusförmig. Dabei öffnen die ersten axialen Abschnitte 86a jeweils nach axial außen. Die zweiten und dritten axialen Abschnitte 86b und 86c öffnen jeweils nach axial innen, also zu der Querebene 89 hin. Der axial innen liegende vierte Wandabschnitt 88d ist jedoch parallel zu der Längsachse 64, also zylindrisch ausgeführt.

Die konusförmigen ersten Wandabschnitte 88a weisen in Bezug auf eine zu der Längsachse 64 rechtwinkligen Ebene jeweils einen Winkel α von in etwa 30 Grad bis in etwa 60 Grad auf. Die konusförmigen zweiten Wandabschnitte 88b weisen in Bezug auf die Längsachse 64 jeweils einen Winkel β auf. Dabei ist der Winkel β vorzugsweise (aber nicht zwingend) in etwa halb so groß ist wie der Winkel α ausgeführt. Die konusförmigen dritten Wandabschnitte 88c weisen in Bezug auf die Längsachse 64 jeweils einen Winkel γ (in der Zeichnung nicht dargestellt) auf, wobei der Winkel γ vorzugsweise kleiner ist als der Winkel β.

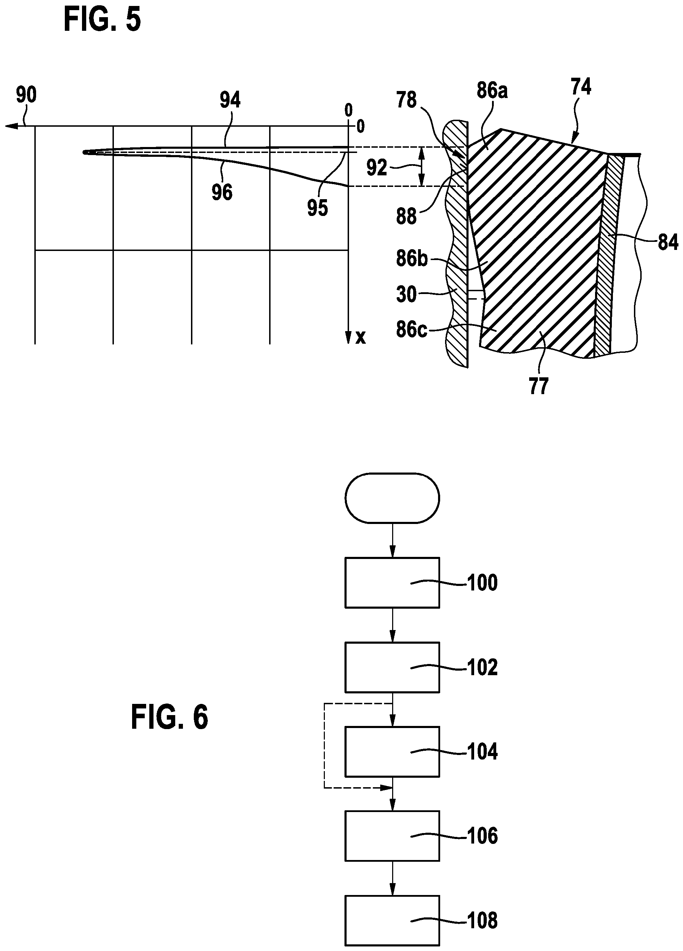

Innerhalb der angegebenen Bereiche können die Winkel α und β in Abhängigkeit von einer Ausführungsform der Dichteinrichtung 74 verschieden bemessen sein. Dabei haben (im verbauten Zustand der Dichteinrichtung 74, wenn also die Dichteinrichtung 74 radial außen an dem Kolben 30 angeordnet ist) die Winkel α und β einen vergleichsweise großen Einfluss auf die Form und die Größe einer Kontaktfläche 88 und insbesondere auf die an der Kontaktfläche 88 sich ergebenden Kräfte, vergleiche die nachfolgende Figur 5.

Figur 5 zeigt in einem in der Zeichnung linken Bereich ein Diagramm, in dem ein Kontaktdruck 90 der Dichteinrichtung 74 in Abhängigkeit von einer (zu der Längsachse 64 parallelen) Längskoordinate x aufgetragen ist. Auf der mit "x" bezeichneten (in der Figur 5 senkrecht nach unten weisenden) Abszisse des dargestellten Koordinatensystems beträgt der Kontaktdruck 90 null. In der Zeichnung rechts ist eine zugehörige Schnittansicht in einem Bereich des Dichtabschnitts 78 der Dichteinrichtung 74 sowie eines Bereichs des Kolbens 30 gezeigt. Eine an den Dichtabschnitt 78 angrenzende vertikale Linie entspricht einer Mantelfläche des Kolbens 30, an welcher der Dichtabschnitt 78 also anliegt. Eine axiale Länge 92 des Dichtabschnitts 78 charakterisiert eine gesamte Anpresskraft der Dichteinrichtung 74 an dem Kolben 30. Vorliegend ist die Dichteinrichtung 74 also verformt.

Die ersten, zweiten, dritten und vierten axialen Abschnitte 86a, 86b, 86c und 86d der Dichteinrichtung 74 und die zugehörigen ersten, zweiten, dritten und vierten Wandabschnitte 88a, 88b, 88c und 88d sind derart ausgeführt, dass sich der Kontaktdruck 90 an der Kontaktfläche 88 zwischen dem Dichtabschnitt 78 und der Mantelfläche des Kolbens 30 entlang der Längsachse 64 bzw. entlang der Längskoordinate x verändert. In der Figur 5 steigt der Kontaktdruck 90 ausgehend von einem Wert "0/0" entlang der Längskoordinate x in einem ersten Kurvenabschnitt 94 steil an und erreicht an einer mit dem Bezugszeichen 95 bezeichneten Stelle der Längskoordinate x ein scharfes Maximum. Weiter entlang der Längskoordinate x fällt der Kontaktdruck 90 in einem zweiten Kurvenabschnitt 96 steil ab.

Ausgehend von der axialen Stelle 95, an welcher der Kontaktdruck 90 maximal ist, ist ein Betrag eines Gradienten (Steigung) des Kontaktdrucks 90 in einer axial von der Stelle 95 zum nächstgelegenen Rand der Dichteinrichtung 74 weisenden Richtung größer als ein Betrag eines Gradienten des Kontaktdrucks 90 in einer axial von der Stelle 95 zum ferngelegenen Rand der Dichteinrichtung 74 weisenden Richtung. Der nächstgelegene Rand ist dem ersten axialen Abschnitt 86a der Dichteinrichtung 74 zugewandt, und der ferngelegene Rand ist dem zweiten axialen Abschnitt 86b der Dichteinrichtung 74 zugewandt.

Insbesondere mit der Dimensionierung der Dichteinrichtung 74 gemäß Figur 4 kann der in Figur 5 gezeigte Kurvenverlauf des Kontaktdrucks 90 erreicht werden. Dadurch wird vorteilhaft ermöglicht, dass ein "Transport" von Flüssigkeit in axialer Richtung entlang des Dichtabschnitts 78 axial einwärts der Dichteinrichtung 74 geringer ist als axial auswärts. Dadurch kann die Dichtwirkung insgesamt deutlich verbessert werden. Weil die Dichteinrichtung 74 jeweils nur einen einzigen axial äußeren Dichtabschnitt 78 aufweist, sind also vorliegend keine axial "inneren" Dichtabschnitte vorhanden, welche gegebenenfalls mangels Flüssigkeit schlecht geschmiert wären und somit vorzeitig verschleißen könnten.

Die Geometrie der Dichteinrichtung 74 kann insbesondere mittels numerischer Verfahren (FEM, Finite-Element-Methode) erfindungsgemäß optimiert werden. Dabei können mehrere die Dichteinrichtung 74 charakterisierende Parameter angepasst werden. Beispielsweise kann es ein Ziel sein, einen vom gewünschten Kontaktdruck 90 abhängigen optimalen "Dichtwinkel" oder auch eine optimale Kontur der Dichtwülste 82 zu ermitteln. Letztere können in Bezug auf ein statisches Abdichten und eine radiale Pressung optimiert werden, wodurch unter anderem auch eine eventuelle translatorische Bewegung der Dichteinrichtung 74 entlang der Längsachse 64 minimiert oder sogar verhindert werden kann.

Die Dichtwülste 82 sind wie bereits oben beschrieben an axial entfernten Abschnitten der Dichteinrichtung 74 angeordnet, und können somit insbesondere ein "Verkippen" der Dichteinrichtung 74 in Bezug auf die Längsachse 64 verhindern. Die Geometrie der bei der Figur 4 beschriebenen ersten, zweiten, dritten und vierten axialen Abschnitte 86a, 86b, 86c und 86d der Dichteinrichtung 74 kann beispielsweise auch in Bezug auf ein verbessertes Aufpressen auf den Kolben 30 und auf sonstige gewünschte Betriebseigenschaften optimiert werden.

Figur 6 zeigt ein Flussdiagramm für ein Verfahren zum Herstellen der Dichteinrichtung 74 der Kraftstoff-Hochdruckpumpe 28 gemäß den Figuren 2 bis 5. In einem Startblock 100 beginnt die in der Figur 6 dargestellte Prozedur.

In einem folgenden Block 102 erfolgt ein Spritzgießen der Dichteinrichtung 74 zu einer Ausgangsform. In einem folgenden Block 104 wird eine axial zentrische Bohrung in der Ausgangsform gebohrt. In einem folgenden Block 106 erfolgt ein spanendes Nachbearbeiten einer radial inneren Kontur der gespritzten bzw. gebohrten Ausgangsform, wodurch ein erster und ein zweiter radial innen umlaufender Dichtabschnitt 78 hergestellt werden, wobei der erste und der zweite Dichtabschnitt 78 jeweils an voneinander entfernt angeordneten axialen Endbereichen der Dichteinrichtung 74 angeordnet sind. In einem folgenden Endeblock 108 endet die in der Figur 6 dargestellte Prozedur.

In einer bevorzugten alternativen Ausführungsform des Verfahrens zum Herstellen der Dichteinrichtung 74 umfasst die im Block 102 hergestellte Ausgangsform bereits die axial zentrische Bohrung, welche in diesem Fall nicht durch einen separaten Bohrvorgang erzeugt wird. Daher ist der Bohrvorgang in dem Block 104 also entbehrlich, was in der Figur 6 durch eine gestrichelte Linie (außen um den Block 104 herum) angedeutet ist.

## Patentansprüche

1. Kraftstoff-Hochdruckpumpe (28) mit einem Kolben (30), an dessen einem Antrieb zugewandten Endabschnitt eine den Kolben (30) radial umschließende Dichteinrichtung (74) angeordnet ist, wobei der Kolben (30) entlang einer Längsachse (64) relativ zu der Dichteinrichtung (74) verschiebbar ist, wobei die Kraftstoff-Hochdruckpumpe einen Förderraum (26) und eine Laufbuchse (66) aufweist und wobei der Kolben (30) als Stufenkolben ausgeführt ist, mit einem ersten Abschnitt mit größerem Durchmesser, mittels welchem er in der Laufbuchse (66) geführt ist, und mit einem zweiten Abschnitt mit kleinerem Durchmesser, der den dem Antrieb zugewandten Endabschnitt des Kolbens (30) umfasst, wobei die Dichteinrichtung (74) einen ersten und einen zweiten radial innen umlaufenden Dichtabschnitt (78) aufweist, wobei der erste und der zweite Dichtabschnitt (78) jeweils an voneinander entfernt angeordneten axialen Endbereichen der Dichteinrichtung (74) angeordnet sind, **dadurch gekennzeichnet, dass** die Dichtabschnitte (78) an einem spanend nachbearbeiteten Spritzgussteil (77) vorhanden und durch spanende Nachbearbeitung hergestellt sind.

2. Kraftstoff-Hochdruckpumpe (28) nach Anspruch 1, **dadurch gekennzeichnet, dass** ein axialer Abstand (80) zwischen dem ersten und dem zweiten Dichtabschnitt (78) mindestens einem Hub des Kolbens (30) entspricht.

3. Kraftstoff-Hochdruckpumpe (28) nach Anspruch 1 oder 2, **dadurch gekennzeichnet, dass** das spanend nachbearbeitete Spritzgussteil (77) axial spiegelsymmetrisch ausgeführt ist.

4. Kraftstoff-Hochdruckpumpe (28) nach wenigstens einem der vorhergehenden Ansprüche, **dadurch gekennzeichnet, dass** mindestens ein axialer Abschnitt (86a, 86b, 86c, 86d) des spanend nachbearbeiteten Spritzgussteils (77) derart ausgeführt ist, dass sich ein Kontaktdruck (90) zwischen einer Kontaktfläche (88) des Dichtabschnitts (78) und einer Mantelfläche des Kolbens (30) entlang der Längsachse (64) verändert.

5. Kraftstoff-Hochdruckpumpe (28) nach Anspruch 4, **dadurch gekennzeichnet, dass** ausgehend von einer axialen Stelle (95), an welcher der Kontaktdruck (90) maximal ist, ein Betrag eines Gradienten des Kontaktdrucks (90) in einer axial von der Stelle (95) zum nächstgelegenen Rand des spanend nachbearbeiteten Spritzgussteils (77) weisenden Richtung größer ist als ein Betrag eines Gradienten des Kontaktdrucks (90) in einer axial von der Stelle (95) zum ferngelegenen Rand des spanend nachbearbeiteten Spritzgussteils (77) weisenden Richtung.

6. Kraftstoff-Hochdruckpumpe (28) nach Anspruch 4 oder 5, **dadurch gekennzeichnet, dass** vor einem Einbau der Dichteinrichtung (74) in die Kraftstoff-Hochdruckpumpe (28) ein radial innerer konusförmiger erster Wandabschnitt (88a) an einem axial äußeren ersten axialen Abschnitt (86a) des spanend nachbearbeiteten Spritzgussteils (77) in Bezug auf eine zu der Längsachse (64) rechtwinkligen Ebene einen Winkel (a) von in etwa 30 Grad bis in etwa 60 Grad aufweist, und ein radial innerer konusförmiger zweiter Wandabschnitt (88b) an einem axial zu dem ersten axialen Abschnitt (86a) benachbarten zweiten axialen Abschnitt (86b) in Bezug auf die Längsachse (64) einen Winkel (β) aufweist, welcher in etwa halb so groß ist wie der Winkel (a).

7. Kraftstoff-Hochdruckpumpe (28) nach wenigstens einem der vorhergehenden Ansprüche, **dadurch gekennzeichnet, dass** an voneinander entfernt angeordneten axialen Endbereichen des spanend nachbearbeiteten Spritzgussteils (77) radial außen jeweils eine Dichtwulst (82) angeordnet ist.

8. Kraftstoff-Hochdruckpumpe (28) nach wenigstens einem der vorhergehenden Ansprüche, **dadurch gekennzeichnet, dass** das spanend nachbearbeitete Spritzgussteil (77) ein Perfluoralkoxy-Material, PFA, umfasst.

9. Verfahren zum Herstellen einer Kraftstoff-Hochdruckpumpe (28) nach Anspruch 1, **dadurch gekennzeichnet, dass** die Dichteinrichtung (74) gemäß den folgenden Schritten hergestellt wird:
(a) Spritzgießen (102) eines Spritzgussteils der Dichteinrichtung (74) zu einer Ausgangsform, wobei die Ausgangsform eine axiale zentrische Bohrung umfasst;
(b) Spanendes Nachbearbeiten (106) einer radial inneren Kontur der Ausgangsform, wodurch ein spanend nachbearbeitetes Spritzgussteil (77) mit einem ersten und einem zweiten radial innen umlaufenden Dichtabschnitt (78) hergestellt wird, wobei der erste und der zweite Dichtabschnitt (78) jeweils an voneinander entfernt angeordneten axialen Endbereichen des spanend nachbearbeiteten Spritzgussteils (77) angeordnet und durch spanende Nachbearbeitung hergestellt sind.

10. Verfahren zum Herstellen einer Kraftstoff-Hochdruckpumpe (28) nach Anspruch 1, **dadurch gekennzeichnet, dass** die Dichteinrichtung (74) gemäß den folgenden Schritten hergestellt wird:
(a1) Spritzgießen (102) eines Spritzgussteils der Dichteinrichtung (74) zu einer Ausgangsform;
(a2) Bohren (104) einer axialen zentrischen Bohrung in der Ausgangsform;
(b) Spanendes Nachbearbeiten (106) einer radial inneren Kontur der Ausgangsform, wodurch ein spanend nachbearbeitetes Spritzgussteil (77) mit einem ersten und einem zweiten radial innen umlaufenden Dichtabschnitt (78) hergestellt wird, wobei der erste und der zweite Dichtabschnitt (78) jeweils an voneinander entfernt angeordneten axialen Endbereichen des spanend nachbearbeiteten Spritzgussteils (77) angeordnet und durch spanende Nachbearbeitung hergestellt sind.

## Claims

1. High-pressure fuel pump (28) having a piston (30), on the end portion of which facing a drive there is arranged a sealing device (74) which radially surrounds the piston (30), wherein the piston (30) can be displaced along a longitudinal axis (64) relative to the sealing device (74), wherein the high-pressure fuel pump has a conveying chamber (26) and a bushing (66), and wherein the piston (30) is constructed as a stepped piston, with a first portion having a comparatively large diameter, by means of which said piston is guided in the bushing (66), and with a second portion having a comparatively small diameter, which comprises that end portion of the piston (30) which faces the drive, wherein the sealing device (74) has a first and a second sealing portion (78) which extend encirclingly in a radially internal manner, wherein the first and the second sealing portions (78) are each arranged at mutually spaced-apart axial end regions of the sealing device (74), **characterized in that** the sealing portions (78) are present on an injection-moulded component (77) which is subsequently processed in a cutting manner and are produced by subsequent processing in a cutting manner.

2. High-pressure fuel pump (28) according to Claim 1, **characterized in that** an axial spacing (80) between the first and the second sealing portion (78) corresponds to at least one stroke of the piston (30).

3. High-pressure fuel pump (28) according to Claim 1 or 2, **characterized in that** the injection-moulded component (77) which is subsequently processed in a cutting manner is constructed in an axially mirror-symmetrical manner.

4. High-pressure fuel pump (28) according to at least one of the preceding claims, **characterized in that** at least one axial portion (86a, 86b, 86c, 86d) of the injection-moulded component (77) which is subsequently processed in a cutting manner is constructed in such a manner that a contact pressure (90) between a contact surface (88) of the sealing portion (78) and a lateral surface of the piston (30) varies along the longitudinal axis (64).

5. High-pressure fuel pump (28) according to Claim 4, **characterized in that**, starting from an axial location (95) at which the contact pressure (90) is at a maximum, a value of a gradient of the contact pressure (90) in a direction facing axially away from the location (95) to the closest edge of the injection-moulded component (77) which has been subsequently processed in a cutting manner is greater than a value of a gradient of the contact pressure (90) in a direction facing axially away from the location (95) to the remote edge of the injection-moulded component (77) which has been subsequently processed in a cutting manner.

6. High-pressure fuel pump (28) according to Claim 4 or 5, **characterized in that**, prior to an installation of the sealing device (74) in the high-pressure fuel pump (28), a radially internal conical first wall portion (88a) at an axially external first axial portion (86a) of the injection-moulded component (77) which has been subsequently processed in a cutting manner has with respect to a plane which is at right angles relative to the longitudinal axis (64) an angle (α) of from approximately 30 degrees to approximately 60 degrees, and a radially internal conical second wall portion (88b) at a second axial portion (86b) which is axially adjacent to the first axial portion (86a) has with respect to the longitudinal axis (64) an angle (β) which is approximately half as large as the angle (α).

7. High-pressure fuel pump (28) according to at least one of the preceding claims, **characterized in that**, at mutually spaced-apart axial end regions of the injection-moulded component (77) which is subsequently processed in a cutting manner, a sealing bead (82) is arranged at the radially external side in each case.

8. High-pressure fuel pump (28) according to at least one of the preceding claims, **characterized in that** the injection-moulded component (77) which is subsequently processed in a cutting manner comprises a perfluoroalkoxy material, PFA.

9. Method for producing a high-pressure fuel pump (28) according to Claim 1, **characterized in that** the sealing device (74) is produced in accordance with the following steps:
(a) injection-moulding (102) an injection-moulded component of the sealing device (74) to form an initial shape, wherein the initial shape comprises an axial central hole;
(b) subsequent processing (106) of a radially internal contour of the initial shape in a cutting manner, whereby an injection-moulded component (77) which has been subsequently processed in a cutting manner is produced with a first and a second sealing portion (78) which extend encirclingly in a radially internal manner, wherein the first and the second sealing portions (78) are each arranged at mutually spaced-apart axial end regions of the injection-moulded component (77) which has been subsequently processed in a cutting manner and are produced by subsequent processing in a cutting manner.

10. Method for producing a high-pressure fuel pump (28) according to Claim 1, **characterized in that** the sealing device (74) is produced in accordance with the following steps:
(a1) injection-moulding (102) an injection-moulded component of the sealing device (74) to form an initial shape;
(a2) drilling (104) an axial central hole in the initial shape;
(b) subsequent processing (106) of a radially internal contour of the initial shape in a cutting manner, whereby an injection-moulded component (77) which has been subsequently processed in a cutting manner and which has a first and a second sealing portion (78) which extend encirclingly in a radially internal manner is produced, wherein the first and the second sealing portions (78) are each arranged at mutually spaced-apart axial end regions of the injection-moulded component (77) which has been subsequently processed in a cutting manner and are produced by subsequent processing in a cutting manner.

## Revendications

1. Pompe à carburant haute pression (28) munie d'un piston (30) au niveau de la partie d'extrémité, tournée vers l'entraînement, duquel est disposé un dispositif d'étanchéité (74) entourant radialement le piston (30), le piston (30) étant déplaçable par rapport au dispositif d'étanchéité (74) le long d'un axe longitudinal (64), la pompe à carburant haute pression comprenant un espace de refoulement (26) et une chemise de cylindre (66) et le piston (30) étant réalisé sous forme de piston étagé doté d'une première partie de plus grand diamètre, au moyen de laquelle il est guidé dans la chemise de cylindre (66), et d'une deuxième partie de plus petit diamètre qui comporte la partie d'extrémité, tournée vers l'entraînement, du piston (30), le dispositif d'étanchéité (74) comprenant une première et une deuxième partie d'extrémité (78) périphérique de manière radialement intérieure, la première et la deuxième partie d'étanchéité (78) étant disposées respectivement au niveau de régions d'extrémité axiales du dispositif d'étanchéité (74) disposées de manière éloignée l'une de l'autre, **caractérisée en ce que** les parties d'étanchéité (78) sont prévues sur une pièce moulée par injection (77) réusinée par enlèvement de copeaux et sont fabriquées par réusinage par enlèvement de copeaux.

2. Pompe à carburant haute pression (28) selon la revendication 1, **caractérisée en ce qu'**une distance axiale (80) entre la première et la deuxième partie d'étanchéité (78) correspond au moins à une course du piston (30).

3. Pompe à carburant haute pression (28) selon la revendication 1 ou 2, **caractérisé en ce que** la pièce moulée par injection (77) réusinée par enlèvement de copeaux est réalisée de manière à présenter une symétrie miroir axialement.

4. Pompe à carburant haute pression (28) selon au moins l'une des revendications précédentes, **caractérisée en ce qu'**au moins une partie axiale (86a, 86b, 86c, 86d) de la pièce moulée par injection (77) réusinée par enlèvement de copeaux est réalisée de telle sorte qu'une pression de contact (90) entre une surface de contact (88) de la partie d'étanchéité (78) et une surface d'enveloppe du piston (30) varie le long de l'axe longitudinal (64).

5. Pompe à carburant haute pression (28) selon la revendication 4, **caractérisée en ce qu'**à partir d'un emplacement axial (95) auquel la pression de contact (90) est maximale, une valeur d'un gradient de la pression de contact (90) dans un sens orienté axialement de l'emplacement (95) vers le bord le plus proche de la pièce moulée par injection (77) réusinée par enlèvement de copeaux est supérieure à une valeur d'un gradient de la pression de contact (90) dans un sens orienté axialement de l'emplacement (95) vers le bord éloigné de la pièce moulée par injection (77) réusinée par enlèvement de copeaux.

6. Pompe à carburant haute pression (28) selon la revendication 4 ou 5, **caractérisée en ce qu'**avant une installation du dispositif d'étanchéité (74) dans la pompe à carburant haute pression (28), une première partie de paroi (88a) conique radialement intérieure présente, au niveau d'une première partie axiale (86a) axialement extérieure de la pièce moulée par injection (77) réusinée par enlèvement de copeaux, un angle (α) d'environ 30 degrés à environ 60 degrés par rapport à un plan perpendiculaire à l'axe longitudinal (64), et une deuxième partie de paroi (88b) conique radialement intérieure présente, au niveau d'une deuxième partie axiale (86b) adjacente à la première partie axiale (86a), un angle (β) par rapport à l'axe longitudinal (64), lequel angle est environ égal à la moitié de l'angle (a) .

7. Pompe à carburant haute pression (28) selon au moins l'une des revendications précédentes, **caractérisée en ce qu'**un bourrelet d'étanchéité (82) est respectivement disposé radialement à l'extérieur au niveau de régions d'extrémité axiales, disposées de manière éloignée l'une de l'autre, de la pièce moulée par injection (77) réusinée par enlèvement de copeaux.

8. Pompe à carburant haute pression (28) selon au moins l'une des revendications précédentes, **caractérisée en ce que** la pièce moulée par injection (77) réusinée par enlèvement de copeaux comporte une matière perfluoro-alcoxy, PFA.

9. Procédé de fabrication d'une pompe à carburant haute pression (28) selon la revendication 1, **caractérisé en ce que** le dispositif d'étanchéité (74) est fabriqué selon les étapes suivantes :
(a) moulage par injection (102) d'une pièce moulée par injection du dispositif d'étanchéité (74) pour obtenir une forme de départ, la forme de départ comportant un alésage centré axial ;
(b) réusinage par enlèvement de copeaux (106) d'un contour radialement intérieur de la forme de départ, de telle sorte qu'une pièce moulée par injection (77) réusinée par enlèvement de copeaux dotée d'une première et d'une deuxième partie d'étanchéité (78) périphérique de manière radialement intérieure soit fabriquée, la première et la deuxième partie d'étanchéité (78) étant disposées respectivement au niveau de régions d'extrémité axiales, disposées de manière éloignée l'une de l'autre, de la pièce moulée par injection (77) réusinée par enlèvement de copeaux et étant fabriquées par réusinage par enlèvement de copeaux.

10. Procédé de fabrication d'une pompe à carburant haute pression (28) selon la revendication 1, **caractérisé en ce que** le dispositif d'étanchéité (74) est fabriqué selon les étapes suivantes :
(a1) moulage par injection (102) d'une pièce moulée par injection du dispositif d'étanchéité (74) pour obtenir une forme de départ ;
(a2) perçage (104) d'un alésage centré axial dans la forme de départ ;
(b) réusinage par enlèvement de copeaux (106) d'un contour radialement intérieur de la forme de départ, de telle sorte qu'une pièce moulée par injection (77) réusinée par enlèvement de copeaux dotée d'une première et d'une deuxième partie d'étanchéité (78) périphérique de manière radialement intérieure soit fabriquée, la première et la deuxième partie d'étanchéité (78) étant disposées respectivement au niveau de régions d'extrémité axiales, disposées de manière éloignée l'une de l'autre, de la pièce moulée par injection (77) réusinée par enlèvement de copeaux et étant fabriquées par réusinage par enlèvement de copeaux.
